# EUROPEAN PATENT SPECIFICATION

(11) **EP 0 978 198 B1**
(45) Date of publication and mention of the grant of the patent: **30.03.2005**
(21) Application number: 98924744.0
(22) Date of filing: 20.04.1998
(51) Int. Cl.: H04N 7/00, H04N 7/173, H04N 7/16

(54) **METHOD AND APPARATUS FOR TIME-SHIFTING VIDEO AND TEXT IN A TEXT-ENHANCED TELEVISION PROGRAM**
VERFAHREN UND VORRICHTUNG ZUR ZEITVERSCHIEBUNG VON VIDEO UND TEXT IN EINEM FERNSEHPROGRAMMMIT TEXTVERBESSERUNG
PROCEDE ET APPAREIL POUR PROGRAMMER DE LA VIDEO ET DU TEXTE DANS UNE EMISSION TELEVISUELLE A TEXTE AMELIORE

(30) Priority: 21.04.1997 US 44161 P; 11.07.1997 US 52248 P
(43) Date of publication of application: 09.02.2000
(73) Proprietor: Gemstar Development Corporation, Pasadena, California 91101 (US)
(72) Inventor: MANKOVITZ, Roy, J., Encino, CA 91316 (US)
(74) Representative: Kinsler, Maureen Catherine
(86) International application number: PCT/US1998/008305
(87) International publication number: WO 1998/048566

(56) References cited:
- GB-A- 2 307 381
- US-A- 5 479 268
- US-A- 5 526 035
- US-A- 5 596 373
- US-A- 5 694 163
- US-A- 5 774 664
- US-A- 5 774 666
- "VERKNUEPFUNG VON TV MIT INTERNET" FUNKSCHAU,DE,FRANZIS-VERLAG K.G. MUNCHEN, vol. 68, no. 18, 16 August 1996 (1996-08-16), page 70-71 XP000631189 ISSN: 0016-2841

## Description

### BACKGROUND

The present invention is a system wherein television program-related information (PRI) is embedded in the vertical blanking interval (VBI) of a television signal for display on a viewer's television screen at the same time as the television program. The PRI is typically contained in an Internet site, the addresses for which are embedded in the television signal. The Internet site addresses may also be transmitted synchronously with, but separate from the video portion, e.g., via an interface device such as a telephone or cable modem. Typically such an "enhanced" television program consists of a display with the video portion of the program in a picture-in-picture (PIP) window and the PRI in the remaining portion of the display area of the television screen.

This PRI may be any textual or graphic information associated with the current television program. The PRI may consist of a textual display of a World Wide Web (WWW) or other Internet site address to which the viewer can choose to link to through a connection with an Internet Service Provider. Alternatively, the PRI may be contained in one or more Web pages, the addresses of which are inserted into the vertical blanking interval (VBI) and are automatically retrieved by the user's terminal and displayed on the display screen. Some examples of PRI are cast members' biographies, trivia about the show, information relating to the particular episode or scene, and closeups of information that cannot be readily seen or is hidden in the video portion of the program. Some of the PRI may be time dependent on the program. For example, the PRI may change to correspond to a particular scene or frame of the television program.

With so much information on the screen, some of which may be changing at a fairly rapid pace, it is desirable to provide the viewer the option of pausing a particular frame of a text-enhanced program display and then resume viewing the program without losing continuity of the video and PRI portions of the program or program content.

According to one embodiment of the invention, a television system is provided which allows a viewer of a PRI-enhanced television program to pause the program at a particular frame, examine the PRI at his or her leisure, perhaps browse through other, linked Web pages, and then resume viewing the program from that frame, without losing continuity of the video and PRI portions of the program or program content.

### SUMMARY

According to one embodiment of the invention, an apparatus for time-shifting video and program related information (PRI) in an enhanced television program is provided which includes a display screen, a tuner for receiving a television signal with embedded data representative of an address for an Internet site including PRI, means for extracting the embedded data from the television signal, a memory for storing the embedded data, input means for inputting viewer commands, a time-shifting apparatus capable of simultaneously storing the television signal as it is received and outputting the stored television signal for display, means for communicating with an Internet service provider to retrieve information from the Internet site including the PRI, and a microcontroller. The microcontroller is configured to retrieve the Internet site address from memory and retrieve the PRI from the Internet site in response to a first viewer command, generate a composite display including a television program contained in the television signal in a first portion of the display and the PRI in a second portion of the display in response to the first viewer command, control the time-shifting apparatus to store the television signal as it is received and display a still frame from the stored television signal in a first portion of the display screen in response to a second viewer command, and control the time-shifting apparatus to output the portion of the stored television signal subsequent to the still frame for display in the first portion of the display in response to a third viewer command.

According to another embodiment, a method for time-shifting video and program related information (PRI) in an enhanced television program is provided which includes the steps of receiving a television signal with embedded data representative of an address for an internet site including PRI, extracting the embedded data from the tetevision signal, storing the embedded data in a memory, selecting an Internet mode in response to a first viewer command, communicating with an Internet service provider to retrieve information from the Internet site including the PRI, displaying a television program contained in the television signal in a first portion of a display screen and the PRI in a second portion of the display screen, storing the television signal in a time-shifting apparatus and continuously displaying a still frame from the stored television signal in response to a second viewer command, and simultaneously displaying the television program subsequent to the still frame from the stored television signal and continuing in store the television signal as it is received in response to a third viewer command.

According to an alternate embodiment, one or more suspend flags are embedded in the television signal, and the "pause" operation wherein the television signal is stored in the time-shifting apparatus and the still frame displayed in response to detection of such a suspend flag. This feature may be deactivated such that the "pause" operation is only performed in response to a viewer command.

### BRIEF DESCRIPTION OF THE DRAWINGS

The foregoing features and advantages of the invention will be better understood by referring to the following drawings:
FIG. 1 is a schematic block diagram of a time-shifting apparatus according to one embodiment of the invention:
FIG. 2 is a display screen in an Internet mode of the time-shining apparatus:
FIG. 3 is a display screen accessed by the viewer from the display screen of FIG. 2; and
FIG. 4 is an alternate layout of the display screens of FIGS. 2 and 3.

### DETAILED DESCRIPTION

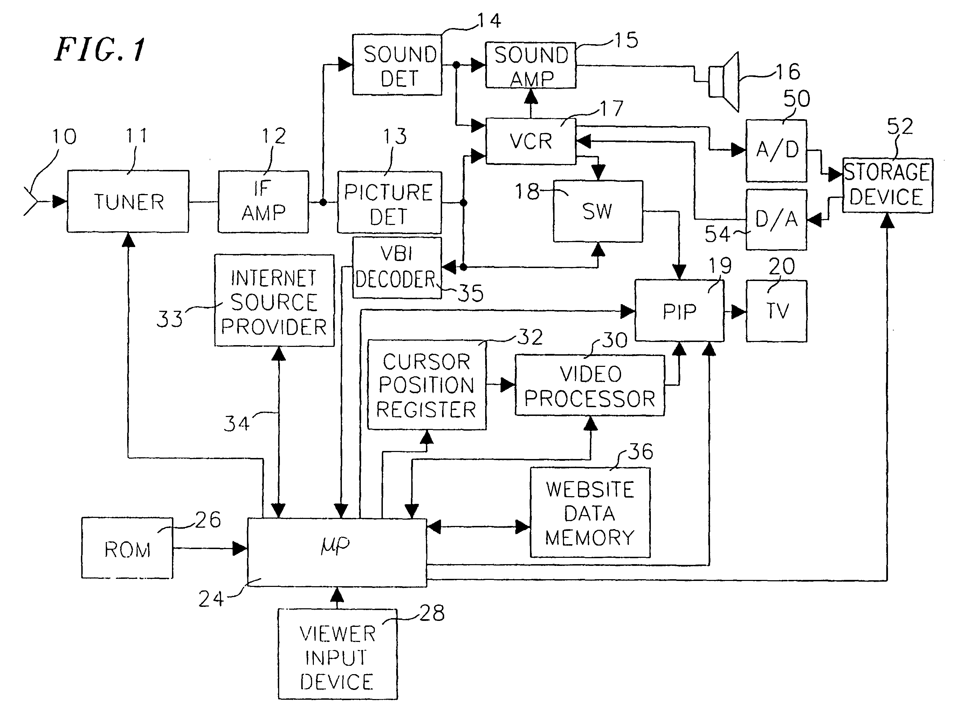

In FIG. 1. the reference numerals refer to the same elements described in application Serial No. 08/475.395 filed on June 6, 1995.

In addition, the system includes 1) an Internet service provider 33 connected to microprocessor 24 by a transmission link 34 such as a telephone network or a television cable. 2) a VBI decoder 35, 3) a website data memory 36 (memory 36 could be part of the RAM of microprocessor 24 or in terms of the disclosure of the '395 application, memory 22), and 4)a digital Storage Device 52 with associate analog-to-digital and digital-to-analog converters 50, 54. An interface device such as a telephone or cable modem (not shown) couples transmission link 34 to microprocessor 24, if necessary. Internet service provider 33 is connected to an Internet backbone in well known fashion to access data at any site on the WWW.

Storage device 52 is a television signal time-shifting apparatus. One such time-shifting apparatus is disclosed in U.S. patent application Serial No. 08/388.345 to Russo, et al. filed February 14, 1995. Such a time-shifting apparatus includes an optical disc for storage of video programs and separate READ and WRITE heads which operate simultaneously such that real time program information can be stored on the disc while previously stored information on the disc can be read and output to the television signal for display. Other storage media which are capable of rapidly storing extremely large amounts of information may also be used, including magnetic tape, optical disk, magneto-optical disk, or solid state memory (i.e., a high capacity charge coupled device video RAM, etc.

The Storage Device 52 holds a large video data buffer (not shown) for storing the television program in digital form. Preferably, the Storage Device is a random access storage medium allowing concurrent reading and writing operations, so that the incoming television signal data may be written to the Storage Device while earlier stored television signal data is being read out for display on TV 20 (that is, time-shifting of the television signal data is performed). The Storage Device 52 has two heads that are separately positionable. When display of the television program is to be suspended, the read head is kept in the same position until a resume command is received. The write head, however, keeps moving to record the incoming television signal data.

To enable a television viewer to access information about a television program that the viewer is watching, PRI is embedded in the VBI of the television signal carrying the television program. For example, the PRI may be textual information regarding actors and actresses in the show, advertisements of program-related merchandise, brief descriptions of the plot of future episodes of the television program, or any other text regarding the television program, or the PRI may be text representing web pages containing such information.

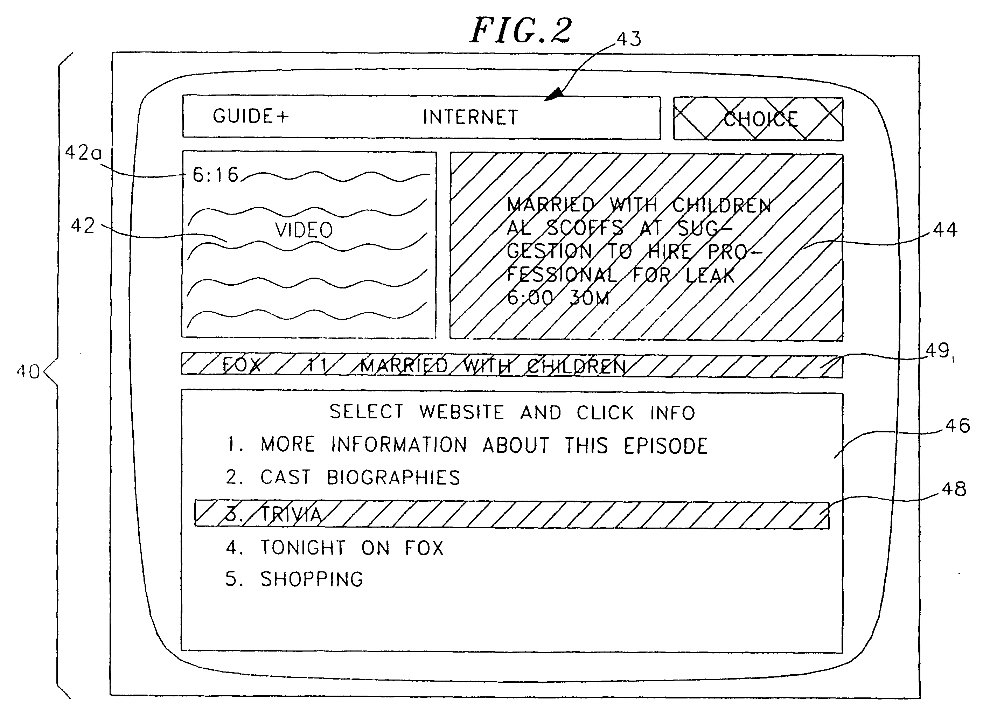

According to a preferred embodiment, the PRI is contained on a web page, the address for which is embedded in the VBI of the television signal. When the television signal carrying the program being watched is captured by tuner 11, the website data embedded in its VBI is stripped out by VBI decoder 35 and sent to microprocessor 24 for storage in website data memory 36. The memory addresses of the website names are linked to the website addresses in memory 36. An icon appears on the screen of television 20 when the television program is displayed full screen, i.e., in the TV mode, to inform the viewer that website data accompanies the television signal and is stored in memory 22. If the viewer wishes to access a website in connection with the television program, the viewer presses a button on a viewer input device 28 such at a remote controller, which introduces the Interner mode of operation shown in FIG. 2 and described below. Microprocessor 24 is programmed to carry out this operation. By repeatedly pressing a button on the viewer input device, the viewer can toggle back and forth between the TV mode and the Internet mode. Although viewer inputs are discussed herein as initiated by buttons on a remote controller, other input devices can also be used. For example, a cursor could be displayed on the television screen which is movable around the screen and a selection can be made (i.e., "clicked") when the cursor is in a desired location of the screen.

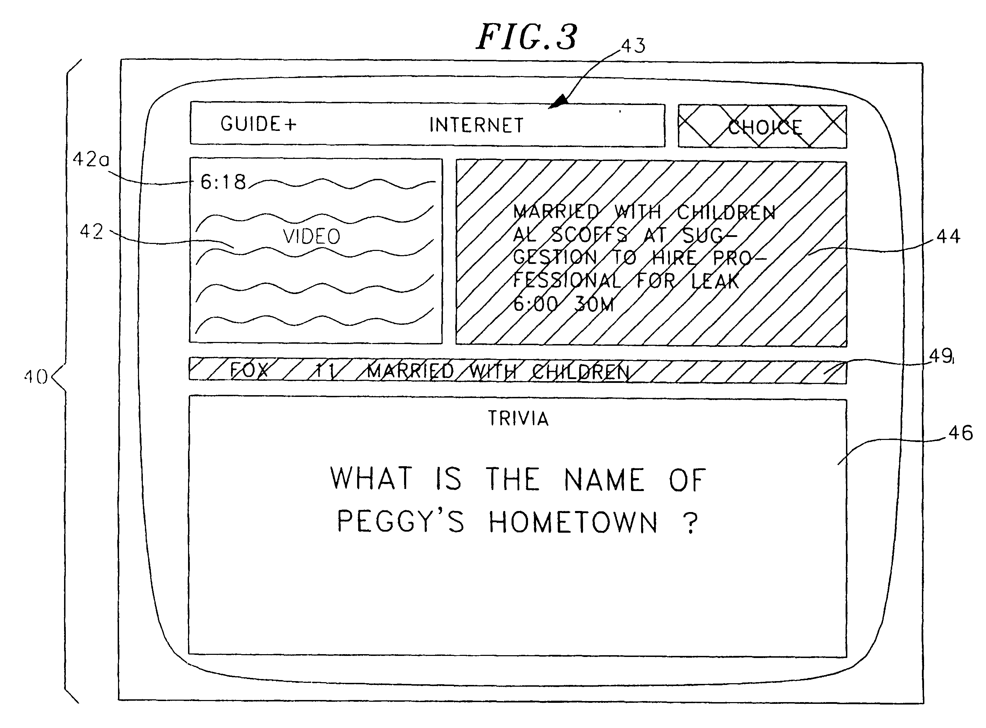

In the Internet mode, the video portion of the television program last viewed in the TV mode is displayed in area 42. As an option, a textual description of the program is displayed in an area 44 and information about the revision program, i.e., program title, station name, and channel number are displayed in a banner 49 underneath areas 42 and 44. A message is displayed at the top of an area 46 to prompt the viewer to select from a number of website names displayed in area 46 by moving a cursor 48 with arrow keys on the viewer input device. For example, if the television program is a serial television show, for example, "Married With Children," the website names could be information related to the show. After a website name is selected, the viewer presses a button on the viewer input device. As a result, the website address to which the selected website name is linked is retrieved from memory 36 by microprocessor 24 and sent through the telephone or cable interface to Internet service provider 33. (If desired, this function of microprocessor 24 could be carried out by commercial equipment sold under the trademark WEB TV.) The information at the addressed website is downloaded from Internet service provider 33 over link 34 to microprocessor 24 and then displayed on the screen simultaneously with the television program to which the information relates, as illustrated in FIG. 3. after being composed by video processor 30. As illustrated in FIG. 3. the name of the website can be displayed above the text of the information from the website. If the television program is a serial television show, as previously stated, the displayed information could include information about the episode, cast biographies, and trivia related to the show. The viewer then navigates about the website in the manner dictated by the viewer's software to find the desired information.

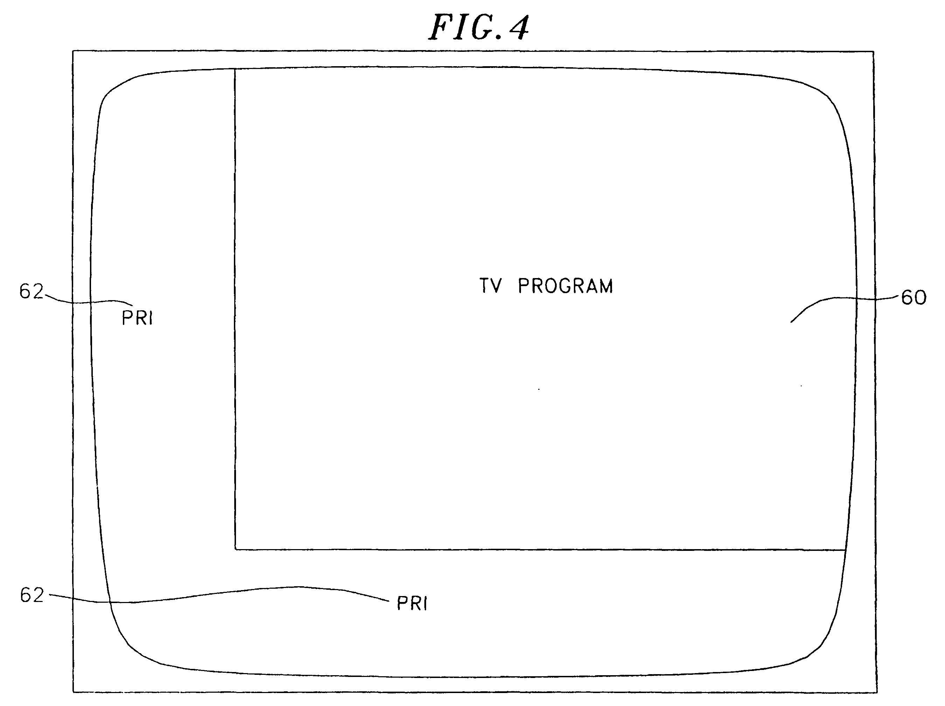

An alternative layout of the television screen for the present invention is shown in FIG. 4. In this layout, the television program is displayed in a majority portion 60 of the screen while the PRI is displayed along two border regions 62. The Web page including the PRI can be specifically configured to display the PRI in the border regions and an area designated for the real time image in the PIP. The PIP circuitry 19 is specially configured to a smaller reduction ratio, for example 1.5:1 rather than 3:1 for a standard PIP, in order to produce the larger PIP display.

The screen portion 60 displays a television program consisting of moving images.

Referring back to FIG. 1, when the viewer interacts with the website data or other PRI displayed on the television screen, the viewer's attention is diverted from the television program being shown to the website data. The viewer is then missing what is happening in the television program until the viewer's interaction with the PRI is concluded. To overcome this situation, an additional component. Storage Device 52, described above, is added to the system to "time-shift" the display of the television program. As the television signal is being received by Tuner 11, the signal is forwarded through IF Amp 12 and Picture DET 13 to VCR 17. The VCR sends the signal through an analog to digital converter (A/D) 50 to Storage Device 52. The Storage Device is under the control of the Microprocessor 24 and is capable of storing the incoming television signal in real-time as digital information for future use.

As the television signal is being stored, if a viewer wants to interact with the PRI such as website data or other textual information being displayed on the television screen, the viewer sends a command to the microprocessor 24 via the viewer input device 28. The viewer action to send the command could, for example, consist of pushing a button on the viewer input device. In response, the microprocessor 24 controls VCR 17 to output the television signal to the Storage Device 52 which begins storing the television signal, including the PRI information embedded in the VBI. The Storage Device 52 simultaneously outputs the first stored frame of the video signal to the signal processing unit for extended display on television 32. The television 32 continues to display this frame until controlled by the viewer to continue without effect on any viewer activity with the PRI shown in the remainder of the display screen. The viewer then interacts with the PRI as described above.

When the viewer is done interacting with the PRI, the viewer sends a command to the microprocessor 24 to resume display of the television program. However, instead of displaying the incoming television signal from Tuner 11, the VCR directs the delivery of the stored television signal data output from the READ head of Storage Device 52 through Digital-to-Analog Converter (D/A) 54 and SW 18 to PIP 19 for display on TV 20. The data displayed is that part of the television program immediately subsequent to the point of suspension. That is, it has been time-shifted. The incoming television signal data continues to be stored by the WRITE head of the Storage Device 52 in a time-ordered manner regardless of the functioning of the READ head. In other words, when display of the television program is to be suspended, the READ head is kept in the same position until a resume command is received. The WRITE head, however, keeps moving to record the incoming television signal data. Hence, at this time the data being stored is not the same data that is being displayed: there is a time lag between the two sets of data. In this manner, the viewer may continue watching the program without losing continuity of the program or PRI content. The viewer can position a cursor and enter input to freeze the display of the television program image on command.

In another embodiment, the PRI is contained on several web pages, each corresponding to a particular portion of the program and transmitted chronologically throughout the duration of the program. The television signal including the embedded website addresses is stored on the Storage Device 52 and hence the corresponding Web pages remain linked to the appropriate portion of the television program as the signal is read out from the Storage Device 52 after a "pause" operation. In this manner, the viewer may continue watching the program without losing continuity of the program or PRI content.

The audio portion of the television signal is also stored in the Storage Device along with the video portion. When the live television program is put info a "freeze" frame state, the audio portion of the television program is also suspended and not transmitted to the viewer. Instead, the audio portion is stored. When display of the suspended television program is resumed, the audio data is obtained from the Storage Device along with the video portion and forwarded by VCR 17 through Sound Amp 15 and loudspeaker 16 to the viewer.

In another embodiment, the television signal is already in digital form, such as for high-definition digital television (HDTV). Therefore, an analog to digital conversion is unnecessary. The Storage Device continuously stores the television signal in a wraparound fashion whenever the system is operational, overwriting the oldest previously stored television signal data when the Storage Device becomes full. The Storage Device should be large enough to hold two to three hours of television programming before overwriting earlier broadcast television signal data.

The present invention allows a viewer to interrupt his or her viewing of a television program to interact with PRI carried in the VBI of the television signal and displayed on the television screen, and yet rejoin the television program at a later point in time without missing any of the program.

In another embodiment, the display of the incoming television signal may be suspended automatically by inserting a suspend flag into the VBI, rather than by an explicit action by the viewer. When the suspend flag is detected by the microprocessor 24 after decoding by VBI decoder 35, the microprocessor instructs the VCR via a control link (not shown) to suspend the current display of the television signal. Resumption of display of the television program is commenced by viewer input. The viewer could also override the automatic suspension feature provided by the suspend flag by setting a predetermined control value to override all automatic suspend flags, or by entering viewer input when the suspension activity occurs in order to rapidly rejoin the television program in progress. Alternatively, a resume flag is inserted into the VBI at a predetermined time after the suspend flag. When the resume flag is received, the microprocessor automatically controls the VCR to resume display of the television program.

According to yet another embodiment, the viewer may access the information as any other storage media, such as a video tape, and pause, rewind, or fast forward to different portions of the program stored on the disc after the initially "pause" command. It may be desirable to continuously record the program on the time-shifting apparatus 46 regardless of a viewer "pause" command to allow for these functions over a period of time, limited only by the storage capacity of the time-shifting device.

Although the present invention has been described with respect to particular embodiments, those skilled in the art will appreciate that the present invention may be modified without departing from the scope of the invention. Accordingly, all such modifications are intended to be included within the scope of the invention as defined by the following claims.

## Claims

1. Apparatus for time-shifting video and program related information (PRI) in an enhanced television program comprising:
a display screen;
a tuner for receiving a television signal with embedded data representative of an address for an Internet site including PRI:
means for extracting the embedded data from the television signal;
a memory for storing the embedded data:
input means for inputting viewer commands;
a time-shifting apparatus capable of simultaneously storing the television signal as it is received and outputting the stored television signal for display:
means for communicating with an Internet service provider to retrieve information from the Internet site including the PRI: and
a microcontroller comprising
means for retrieving the Internet site address from memory and retrieving the PRI from the Internet site in response to a first viewer command:
means for generating a composite display including a television program contained in the television signal in a first portion of the display and the PRI in a second portion of the display in response to the first viewer command.
means for controlling the time-shifting apparatus to store the television signal as it is received and display a still frame from the stored television signal in a first portion of the display screen in response to a second viewer command, and
means for controlling the time-shifting apparatus to output the portion of the stored television signal subsequent to the still frame for display in the first portion of the display in response to a third viewer command.

2. The apparatus of claim 1 wherein the time-shifting apparatus is an optical disc.

3. The apparatus of claim 1 wherein the time-shifting apparatus is a solid state memory.

4. The apparatus of claim 1 wherein the PRI comprises text and graphics rotated to the television program.

5. The apparatus of claim 4 wherein the PRI comprises a plurality of website addresses.

6. The apparatus of claim 5 wherein the microcontroller comprises means for retrieving information from one of said plurality of website addresses in response to a fourth viewer command.

7. The apparatus of claim 1 wherein the first portion of the display covers a minor portion of the display screen and the second portion of the display covers a major portion of the display screen.

8. The apparatus of claim 1 wherein the first portion or the display covers a major portion of the display screen and the second portion of the display covers a minor portion of the display screen.

9. The apparatus of claim 1 wherein the means for communicating with the internet service provider is a modem.

10. A method for time-shifting video and program related information (PRI) in an enhanced television program comprising the steps of:
receiving a television signal with embedded data representative of an address for an Internet site including PRI;
extracting the embedded data from the television signal;
storing the embedded data in a memory;
in response to a first viewer command, retrieving the Internet site address from memory and selecting an Internet mode
communicating with an Internet service provider to retrieve information from the Internet site including the PRI;
displaying a television program contained in the television signal in a first portion of a display screen and the PRI in a second portion of the display screen;
storing the television signal in a time-shifting apparatus and continuously displaying a still frame from the stored television signal in the first portion of the display screen in response to a second viewer command; and
simultaneously displaying the television program subsequent to the still frame from the stored television signal in the first portion of the display screen and continuing to store the television signal as it is received in response to a third viewer command.

11. The method of claim 10 wherein the PRI comprises a plurality of website addresses and further comprising the steps of:
selecting one of the plurality of website addresses in the PRI;
retrieving information from the selected website address: and
displaying the information from the selected website address.

12. A method for time-shifting video and program related information (PRI) in an enhanced television program comprising the steps of:
receiving a television signal with embedded data representative of an address for an Internet site including PRI and a suspend flag:
extracting the embedded data from the television signal;
storing the embedded data in a memory;
in response to a first viewer command selecting an Internet mode, retrieving the Internet site address from memory and
communicating with an Internet service provider to retrieve information from the Internet site including the PRI;
displaying a television program contained in the television signal in a first portion of a display screen and the PRI in a second portion of the display screen:
detecting the suspend flag;
storing the television signal in a time-shifting apparatus and continuously displaying a still frame from the stored television signal in the first portion of the display screen, and
simultaneously displaying the television program subsequent to the still frame from the stored television signal in the first portion of the display screen and continuing to store the television signal as it is received in response to a second viewer command.

13. The method of claim 12 wherein the step of storing ten television signal in the time-shifting apparatus is performed in response to detecting the suspend flag.

14. The method of claim 12 wherein the step of storing the television signal in the time-shifting apparatus is performed in response to a third viewer command.

## Patentansprüche

1. Vorrichtung zur Zeitverschiebung von Video- und programmbezogenen Informationen (PRI) in einem verbesserten Fernsehprogramm, umfassend:
eine Bildschirmanzeige,
einen Tuner zum Empfang eines Fernsehsignals mit darin eingeschlossenen Daten, die eine Adresse für eine Website umfassen, welche programmbezogene Informationen enthält;
eine Einrichtung zum Herauslösen der eingeschlossenen Daten aus dem Fernsehsignal;
einen Speicher zum Speichern der eingeschlossenen Daten;
eine Eingabeeinrichtung zur Eingabe von Befehlen durch den Zuschauer;
eine Zeitverschiebungsvorrichtung, die es ermöglicht, gleichzeitig das Fernsehsignal, wenn es empfangen wird, zu speichern und das gespeicherte Fernsehsignal zur Anzeige auszugeben;
eine Einrichtung zur Verbindungsaufnahme mit einem Internetprovider, um Informationen von der Website zu gewinnen, welche programmbezogene Informationen (PRI) enthalten; und
eine Mikrosteuerung umfassend:
eine Einrichtung zur Ermittlung der Websiteadresse aus dem Speicher und zur Gewinnung der PRI aus der Website in Reaktion auf einen ersten Befehl des Zuschauers;
eine Einrichtung zur Erzeugung einer zusammengesetzten Anzeige, die ein Fernsehprogramm umfasst, das in einem Fernsehsignal enthalten ist, in einem ersten Anzeigebereich sowie der PRI in einem zweiten Anzeigebereich in Reaktion auf den ersten Befehl des Zuschauers;
eine Einrichtung zur Steuerung der Zeitverschiebungsvorrichtung, um das Fernsehsignal zu speichern, wenn es empfangen wird, und ein Standbild von dem gespeicherten Fernsehsignal in einen ersten Bereich der Bildschirmanzeige in Reaktion auf einen zweiten Befehl des Zuschauers anzuzeigen, und
eine Einrichtung zur Steuerung der Zeitverschiebungseinrichtung, um den Teil des gespeicherten Fernsehsignals, das dem Standbild folgt, zur Anzeige im ersten Anzeigebereich in Reaktion auf einen dritten Befehl des Zuschauers auszugeben.

2. Vorrichtung nach Anspruch 1, bei welcher die Zeitverschiebungsvorrichtung eine optische Speicherplatte ist.

3. Vorrichtung nach Anspruch 1, bei welcher die Zeitverschiebungsvorrichtung eine integrierte Speicherschaltung ist.

4. Vorrichtung nach Anspruch 1, bei welcher die PRI Text und Graphiken umfassen, die sich auf das Fernsehprogramm beziehen.

5. Vorrichtung nach Anspruch 4, bei welcher die PRI eine Mehrzahl von Websiteadressen umfassen.

6. Vorrichtung nach Anspruch 5, bei welcher die Mikrosteuerung eine Einrichtung zur Gewinnung von Informationen aus einer der Mehrzahl von Websiteadressen in Reaktion auf einen vierten Befehl des Zuschauers umfasst.

7. Vorrichtung nach Anspruch 1, bei welcher der erste Anzeigebereich einen kleineren Bereich der Bildschirmanzeige und der zweite Anzeigebereich einen größeren Bereich der Bildschirmanzeige umfasst.

8. Vorrichtung nach Anspruch 1, bei welcher der erste Anzeigebereich einen größeren Bereich der Bildschirmanzeige und der zweite Anzeigebereich einen kleineren Bereich der Bildschirmanzeige umfasst.

9. Vorrichtung nach Anspruch 1, bei welcher die Einrichtung zur Verbindungsaufnahme mit dem Internetprovider ein Modem ist.

10. Verfahren zur Zeitverschiebung von Video- und programmbezogenen Informationen (PRI) in einem verbesserten Fernsehprogramm, umfassend folgende Schritte:
Empfang eines Fernsehsignals mit eingeschlossenen Daten, die eine Adresse für eine Website umfassen, welche PRI enthält;
Herauslösen der eingeschlossenen Daten aus dem Fernsehsignal;
Speichern der eingeschlossenen Daten in einem Speicher;
in Reaktion auf einen ersten Befehl des Zuschauers: Wählen eines Internetmodus, Gewinnen der Websiteadresse aus dem Speicher und Verbindungsaufnahme mit dem Internetprovider, um die Informationen aus der Website zu gewinnen, welche die PRI enthalten;
Anzeige eines Fernsehprogramms, das in dem Fernsehsignal enthalten ist, in einem ersten Bereich der Bildschirmanzeige, und der PRI in einem zweiten Bereich der Bildschirmanzeige;
Speichern des Fernsehsignals in einer Zeitverschiebungsvorrichtung sowie ständige Anzeige eines Standbildes aus dem gespeicherten Fernsehsignal in dem ersten Bereich der Bildschirmanzeige in Reaktion auf einen zweiten Befehl des Zuschauers; und
gleichzeitige Anzeige des Fernsehprogramms nach dem Standbild von dem gespeicherten Fernsehsignal in dem ersten Bereich der Bildschirmanzeige und Fortsetzung der Speicherung des Fernsehsignals, wenn es in Reaktion auf einen dritten Befehl des Zuschauers empfangen wird.

11. Verfahren nach Anspruch 10, bei welchem die PRI eine Mehrzahl von Websiteadressen umfassen, und welches weiterhin folgende Schritte umfasst:
Auswahl einer aus der Mehrzahl von Websiteadressen in den PRI;
Gewinnen von Informationen aus der gewählten Websiteadresse; und
Anzeige der Informationen aus der gewählten Websiteadresse.

12. Verfahren zur Zeitverschiebung von Video- und programmbezogenen Informationen (PRI) in einem verbesserten Fernsehprogramm, umfassend folgende Schritte:
Empfangen eines Fernsehsignals mit darin eingeschlossenen Daten, die eine Adresse für eine Website umfassen, welche PRI und eine Verschiebungsmarkierung enthalten;
Herauslösen der eingeschlossenen Daten aus dem Fernsehsignal;
Speichern der eingeschlossenen Daten in einem Speicher;
in Reaktion auf einen ersten Befehl des Zuschauers: Wählen eines Internetmodus, Gewinnen der Websiteadresse aus dem Speicher und
Verbindungsaufnahme mit einem Internetprovider, um Informationen aus der Website zu gewinnen, welche die PRI enthalten;
Anzeigen eines Fernsehprogramms, welches in dem Fernsehsignal enthalten ist, in einem ersten Bereich der Bildschirmanzeige und der PRI in einem zweiten Bereich der Bildschirmanzeige;
Ermitteln der Verschiebungsmarkierung;
Speichern des Fernsehsignals in einer Zeitverschiebungsvorrichtung und fortwährende Anzeige eines Standbildes von dem gespeicherten Fernsehsignal in dem ersten Bereich der Bildschirmanzeige und
gleichzeitige Anzeige des Fernsehprogramms nach dem Standbild von dem gespeicherten Fernsehsignal in dem ersten Bereich der Bildschirmanzeige und Fortsetzung der Speicherung des Fernsehsignals, wenn es in Reaktion auf einen zweiten Befehl des Zuschauers empfangen wird.

13. Verfahren nach Anspruch 12, bei welchem der Schritt der Speicherung des Fernsehsignals in der Zeitverschiebungsvorrichtung in Reaktion auf die Ermittlung der Verschiebungsmarkierung ausgeführt wird.

14. Verfahren nach Anspruch 12, bei welchem der Schritt der Speicherung des Fernsehsignals in der Zeitverschiebungsvorrichtung in Reaktion auf einen dritten Befehl des Zuschauers ausgeführt wird.

## Revendications

1. Appareil pour décaler dans le temps de la vidéo et des informations relatives aux émissions (PRI) dans une émission de télévision améliorée, comprenant :
un écran d'affichage ;
un syntoniseur pour recevoir un signal de télévision avec des données incorporées représentatives d'une adresse d'un site Internet contenant des informations PRI ;
des moyens pour extraire les données incorporées du signal de télévision ;
une mémoire pour stocker les données incorporées ;
des moyens d'entrée pour entrer des commandes de téléspectateur ;
un appareil de décalage dans le temps simultanément capable de stocker le signal de télévision à mesure qu'il est reçu et de délivrer le signal de télévision stocké pour son affichage ;
des moyens pour communiquer avec un fournisseur de services Internet afin d'extraire des informations du site Internet comprenant les informations PRI ; et
un microcontrôleur comprenant :
des moyens pour extraire l'adresse du site Internet de la mémoire et pour extraire les informations PRI du site Internet en réponse à une première commande de téléspectateur ;
des moyens pour générer un affichage composite comprenant une émission de télévision contenue dans le signal de télévision dans une première partie de l'affichage et les informations PRI dans une seconde partie de l'affichage en réponse à la première commande de téléspectateur ;
des moyens pour commander l'appareil de décalage dans le temps afin de stocker le signal de télévision à mesure qu'il est reçu et d'afficher une image fixe provenant du signal de télévision stocké dans une première partie de l'écran d'affichage en réponse à une seconde commande de téléspectateur ; et
des moyens pour commander l'appareil de décalage dans le temps pour délivrer en sortie la partie du signal de télévision stocké après l'image fixe pour son affichage dans la première partie de l'affichage en réponse à une troisième commande de téléspectateur.

2. Appareil selon la revendication 1, **caractérisé en ce que** l'appareil de décalage dans le temps est un disque optique.

3. Appareil selon la revendication 1, **caractérisé en ce que** l'appareil de décalage dans le temps est une mémoire à semi-conducteurs.

4. Appareil selon la revendication 1, **caractérisé en ce que** les informations PRI contiennent du texte et des éléments graphiques relatifs à l'émission de télévision.

5. Appareil selon la revendication 4, **caractérisé en ce que** les informations PRI comprennent une pluralité d'adresses de sites web.

6. Appareil selon la revendication 5, **caractérisé en ce que** le microcontrôleur comprend des moyens d'extraction d'informations de l'une de ladite pluralité d'adresses de sites web en réponse à une quatrième commande de téléspectateur.

7. Appareil selon la revendication 1, **caractérisé en ce que** la première partie de l'affichage couvre une partie mineure de l'écran d'affichage et **en ce que** la seconde partie de l'affichage couvre une partie majeure de l'écran d'affichage.

8. Appareil selon la revendication 1, **caractérisé en ce que** la première partie de l'affichage couvre une partie majeure de l'écran d'affichage et **en ce que** la seconde partie de l'affichage couvre une partie mineure de l'écran d'affichage.

9. Appareil selon la revendication 1, **caractérisé en ce que** les moyens de communication avec le fournisseur de services Internet sont un modem.

10. Procédé pour décaler dans le temps de la vidéo et des informations relatives aux émissions (PRI) dans une émission de télévision améliorée, comprenant les étapes suivantes :
réception d'un signal de télévision avec des données incorporées représentatives d'une adresse d'un site Internet comprenant des informations PRI ;
extraction des données incorporées du signal de télévision ;
stockage des données incorporées dans une mémoire ;
en réponse à une première commande de téléspectateur, extraction de l'adresse du site Internet de la mémoire et sélection d'un mode Internet ;
communication avec un fournisseur de services Internet afin d'extraire des informations du site Internet comprenant les informations PRI ;
affichage d'une émission de télévision contenue dans le signal de télévision dans une première partie d'un écran d'affichage et des informations PRI dans une seconde partie de l'écran d'affichage ;
stockage du signal de télévision dans un appareil de décalage dans le temps et affichage en continu d'une image fixe provenant du signal de télévision stocké dans la première partie de l'écran d'affichage en réponse à une seconde commande de téléspectateur ; et
affichage simultané de l'émission de télévision après l'image fixe provenant du signal de télévision stocké dans la première partie de l'écran d'affichage et poursuite du stockage du signal de télévision à mesure qu'il est reçu en réponse à une troisième commande de téléspectateur.

11. Procédé selon la revendication 10, **caractérisé en ce que** les informations PRI comprennent une pluralité d'adresses de sites web et comprennent en outre les étapes suivantes :
sélection de l'une de la pluralité d'adresses de sites web dans les informations PRI ;
extraction d'informations de l'adresse de site web sélectionnée ; et
affichage des informations provenant de l'adresse de site web sélectionnée.

12. Procédé pour décaler dans le temps de la vidéo et des informations relatives aux émissions (PRI) dans une émission de télévision améliorée, comprenant les étapes suivantes :
réception d'un signal de télévision contenant des données incorporées représentatives d'une adresse d'un site Internet comprenant des informations PRI et un indicateur de suspension ;
extraction des données incorporées du signal de télévision ;
stockage des données incorporées dans une mémoire ;
en réponse à une première commande de téléspectateur, extraction de l'adresse du site Internet de la mémoire et sélection d'un mode Internet ;
communication avec un fournisseur de services Internet afin d'extraire des informations du site Internet comprenant les informations PRI ;
affichage d'une émission de télévision contenue dans le signal de télévision dans une première partie d'un écran d'affichage et des informations PRI dans une seconde partie de l'écran d'affichage ;
détection de l'indicateur de suspension ;
stockage du signal de télévision dans un appareil de décalage dans le temps et affichage en continu d'une image fixe provenant du signal de télévision stocké dans la première partie de l'écran d'affichage ; et
affichage simultané de l'émission de télévision après l'image fixe provenant du signal de télévision stocké dans la première partie de l'écran d'affichage et poursuite du stockage du signal de télévision à mesure qu'il est reçu en réponse à une seconde commande de téléspectateur.

13. Procédé selon la revendication 12, **caractérisé en ce que** l'étape de stockage du signal de télévision dans l'appareil de décalage dans le temps est effectuée en réponse à la détection de l'indicateur de suspension.

14. Procédé selon la revendication 12, **caractérisé en ce que** l'étape de stockage du signal de télévision dans l'appareil de décalage dans le temps est effectuée en réponse à une troisième commande de téléspectateur.
